# EUROPÄISCHE PATENTANMELDUNG

(11) **EP 4 307 418 A1**
(43) Veröffentlichungstag der Anmeldung: **17.01.2024**
(21) Anmeldenummer: 23184973.8
(22) Anmeldetag: 12.07.2023
(51) Int. Cl.: H01M 10/052, H01M 10/659, H01M 50/19, H01M 50/209, H01M 50/24

(54) **FEUERBESTÄNDIGE TRANSPORT- UND LAGERVORRICHTUNG FÜR INTAKTE UND BESCHÄDIGTE AKKUMULATOREN UND/ODER BATTERIEN, UND VERWENDUNG EINES INNENBEHÄLTERS ZUM AUFNEHMEN EINES AKKUMULATORS UND/ODER EINER BATTERIE**

(30) Priorität: 12.07.2022 DE 202022103907 U
(71) Anmelder: B & W International GmbH, 49479 Ibbenbüren (DE)
(72) Erfinder: Weisser, Martin, 49076 Osnabrück (DE)
(74) Vertreter: Eisenführ Speiser

(57) **Zusammenfassung**

Die Erfindung betrifft eine feuerbeständige Transport- und Lagervorrichtung (1) für intakte und beschädigte Akkumulatoren und/oder Batterien, insbesondere Lithium-Ionen-Akkumulatoren und/oder Lithium-Ionen-Batterien, mit einem Innenbehälter (2) zum Aufnehmen mindestens eines Akkumulators und/oder einer Batterie, und einem den Innenbehälter (2) umgebenden Außenbehälter (4), mit einem Bodenteil (10) und einem beweglichen Deckelteil (12), welches mit dem Bodenteil (10) zum Schließen des Außenbehälters (4) in Kontakt bringbar ist.

Die Erfindung zeichnet sich dadurch aus, dass der Innenbehälter (2) ein Unterteil (6) und ein Oberteil (8) aufweist, welches in einem Bereitschaftszustand der Vorrichtung (1) zum Unterteil (6) beabstandet angeordnet ist, wobei das Oberteil (8) und das Unterteil (6) dazu eingerichtet sind, im Falle eines Übergangs der Vorrichtung in ihren Aktivzustand zum abdichtenden Verschließen des Innenbehälters (2) miteinander in Kontakt gebracht zu werden.

## Beschreibung

Die Erfindung betrifft eine feuerbeständige Transport- und Lagervorrichtung für intakte und beschädigte Akkumulatoren und/oder Batterien, insbesondere Lithium-Ionen-Akkumulatoren und/oder Lithium-Ionen-Batterien, mit einem Innenbehälter zum Aufnehmen mindestens eines Akkumulators und/oder einer Batterie und einem den Innenbehälter umgebenden Außenbehälter, mit einem Bodenteil und einem beweglichen Deckelteil, welches mit dem Bodenteil zum Schließen des Außenbehälters in Kontakt bringbar ist. Des Weiteren betrifft die Erfindung die Verwendung eines Innenbehälters zum Aufnehmen mindestens eines Akkumulators und/oder einer Batterie.

Im Stand der Technik sind derartige Transport- und Lagervorrichtungen bekannt, welche zum sicheren Transport und Lagern von Akkumulatoren und/oder Batterien, insbesondere von Lithium-Ionen-Akkumulatoren und/oder Lithium-Ionen-Batterien, verwendet werden. Speziell Lithium-Ionen-Akkumulatoren und -Batterien neigen unter bestimmten Umständen zu einer kritischen Reaktion innerhalb des Akkumulators oder der Batterie, was zu einem thermischen Durchgehen des Akkumulators, auch als Akku bezeichnet, und/oder Batterie führen kann. Das thermische Durchgehen von Lithium-Ionen-Akkumulatoren und/oder Lithium-Ionen-Batterien ist eine Überhitzung einer innerhalb des Akkumulators oder Batterie ablaufenden exothermen chemischen Reaktion in Folge eines sich selbst verstärkenden Prozesses, bei dem fortwährend Wärme produziert wird. Ursachen für einen solchen Überhitzungsprozess kann unter anderem das Überladen, eine mechanische Beschädigung, ein übermäßiges Entladen oder auch das Überhitzen eines Akkumulators oder einer Batterie sein. Die im Innern des Akkus oder der Batterie ablaufende exotherme chemische Reaktion kann von einer einzelnen Zelle auf weitere benachbarte Zellen übergreifen und somit zu einer Kettenreaktion und damit dem thermischen Durchgehen führen. Bei diesem Prozess entsteht im Akku und der Batterie Wärme und unter anderem auch umwelt- oder gesundheitsschädliche Gase, die den Druck innerhalb des Akkus oder der Batterie stark ansteigen lassen.

Transport- und Lagervorrichtung für Akkumulatoren und Batterien müssen aufgrund der beim Lagern und dem Transport bestehenden Risiken besondere Vorgaben erfüllen, welche unter anderem in der Verpackungsanweisung P911 zusammengefasst sind.

Diese Verpackungsanweisung gilt für beschädigte oder defekte Zellen und Batterien der UN-Nummern 3090, 3091, 3480 und 3481, die unter normalen Beförderungsbedingungen zu einer schnellen Zerlegung, gefährlichen Reaktion, Flammenbildung, gefährlichen Wärmeentwicklung oder einem gefährlichen Ausstoß giftiger, ätzender oder entzündbarer Gase oder Dämpfe neigen. Die Verpackungen müssen den Prüfanforderungen für die Verpackungsgruppe I entsprechen. Die Verpackung muss bei einer schnellen Zerlegung, einer gefährlichen Reaktion, einer Flammenbildung, einer gefährlichen Wärmeentwicklung oder einem gefährlichen Ausstoß giftiger, ätzender oder entzündbarer Gase oder Dämpfe der Zellen oder Batterien in der Lage sein, die folgenden zusätzlichen Prüfanforderungen zu erfüllen:
- die Temperatur der äußeren Oberfläche des vollständigen Versandstücks darf nicht höher sein als 100 °C. Eine kurzzeitige Temperaturspitze von bis zu 200 °C ist zulässig
- außerhalb des Versandstücks darf sich keine Flamme bilden
- aus dem Versandstück dürfen keine Splitter austreten;
- die bauliche Unversehrtheit des Versandstücks muss aufrechterhalten werden und
- die Verpackungen müssen gegebenenfalls über ein Gasmanagementsystem (z.B. Filtersystem, Luftzirkulation, Gasbehälter, gasdichte Verpackung) verfügen."

Geläufige Lösungen zur Erfüllung der oben beschriebenen Anforderungen sind unter anderem verhältnismäßig massiv ausgeführte Lagerbehälter aus Metall. Diese Lagerbehälter sind so ausgelegt, dass sie im Falle eines thermischen Durchgehens der darin gelagerten Lithium-Ionen-Akkumulatoren oder Lithium-Ionen-Batterien möglichst keinerlei Druck oder Gas entweichen lassen und den Zustrom von frischem Sauerstoff, der für den anhaltenden Brand der Lithium-Ionen-Akkumulatoren oder Lithium-Ionen-Batterien erforderlich ist, durch den permanenten Verschlusszustand des Behälters verhindern. Dafür sind eine entsprechende Wandstärke sowie massive Verschlüsse vonnöten. Daraus folgen ein verhältnismäßig hohes Gewicht sowie erhöhte Kosten für diese Ausführungsform eines Lagerbehälters für Lithium-Ionen-Akkumulatoren oder Lithium-Ionen-Batterien. Häufig wird außerdem noch ein brandhemmender Zusatzstoff wie PyroBubbles^{®} verwendet, der Gewicht und Preis weiter steigert.

Ein anderer Transport- und Lagerbehälter für beschädigte Lithium-Ionen-Akkumulatoren oder Lithium-Ionen-Batterien wird unter dem Handelsnamen SafetyBATTbox vertrieben. Bei diesem Lagerbehälter werden die oben beschriebenen Anforderungen durch den Einsatz von sogenannten LogBAGs erfüllt. LogBAGs sind zum Beispiel aus Glasfasern gefertigte Kissen, die mit einem isolierenden und brandhemmenden Stoff gefüllt sind. Kommt es zum thermischen Durchgehen eines eingelagerten Lithium-Ionen-Akkumulator oder einer Lithium-Ionen-Batterie, kann der Druck zwischen den Kissen kontrolliert entweichen. Die Sauerstoffzufuhr kann zwar nicht vollends unterbunden werden, aber durch die Isolationswirkung der LogBAGs werden die teilweise hohen Temperaturen des Brandes der Akkus oder Batterien nicht nach außen transportiert. Der zwischen den Kissen herrschende Schwelbrand kann unter bestimmten Umständen verhältnismäßig lange anhalten und zu einer permanenten Rauchentwicklung führen. Außerdem steigt durch einen Schwelbrand und die damit punktuell anhaltende, hohe Temperatur die Gefahr des thermischen Durchgehens weiterer, eingelagerter Akkus oder Batterien. Außerdem wird für die Umsetzung dieser Lösung eine erhebliche Menge LogBAGs benötigt, was die Kosten dieser Lagerbehälter weiter erhöht. Darüber hinaus können aufgrund der durch den Füllstoff beschränkten Schutzwirkung nur bestimmte Akkutypen eingelagert werden.

Ähnliche Eigenschaften weisen Lösungen anderer Hersteller auf. Ein ergänzendes Beispiel ist hier der Sicherheitsbehälter "AKKU SAFE" von ZARGES. Auch bei diesem System werden Behälter verwendet, die mit speziellen, brandhemmenden und isolierenden Kissen namens CIRRUX gefüllt sind.

Des Weiteren ist aus DE 10 2018 105 530 A1 eine Akku-Transportvorrichtung für Akkumulatoren, insbesondere Lithium-Akkumulatoren, mit einer Außen-Kiste und einer Innen-Wanne, die innerhalb der Außen-Kiste aufgenommen ist, bekannt.

Der vorliegenden Erfindung lag somit die Aufgabe zugrunde, eine feuerbeständige Transport-Lagervorrichtung für Akkumulatoren und/oder Batterien anzugeben, welche die vorstehend angeführten Nachteile überwindet. Insbesondere lag der Erfindung die Aufgabe zugrunde eine Transport- und Lagervorrichtung aufzuzeigen, mittels der der Transport und das Lagern eines Akkumulators oder einer Batterie selbst bei Auftreten einer exothermen chemischen Reaktion auf einfache und sichere Weise gewährleistet werden kann.

Die Erfindung löst die ihr zugrundeliegende Aufgabe bei einer feuerbeständigen Transport- und Lagervorrichtung für intakte und beschädigte Akkumulatoren und/oder Batterien mit den Merkmalen nach Anspruch 1. Insbesondere weist der Innenbehälter ein Unterteil und ein Oberteil auf, welches in einem Bereitschaftszustand der Vorrichtung zum Unterteil beabstandet angeordnet ist, wobei das Oberteil und das Unterteil dazu eingerichtet sind, im Falle eines Übergangs der Vorrichtung in ihren Aktivzustand zum abdichtenden Verschließen des Innenbehälters miteinander in Kontakt gebracht zu werden.

Die erfindungsgemäße Transport- und Lagervorrichtung verfolgt den Ansatz, dass so lange der darin aufgenommene Akkumulator oder die Batterie im Normalzustand ist, ein ungehinderter Zugang zum Lagerraum des Akkumulators oder der Batterie durch das Halten des Oberteils und des Unterteils des Innenbehälters in einem vorbestimmten Abstand zueinander möglich ist. Erst, wenn sich an dem Akkumulator oder der Batterie ein kritischer Zustand einstellt und dieser Zustand eine vorbestimmte Zeitdauer anhält, geht die erfindungsgemäße Vorrichtung in ihren Aktivzustand über, wobei das Oberteil und das Unterteil dann miteinander zum abdichtenden Verschließen des Innenbehälters in Kontakt gebracht werden. Der direkte Zugang zum Akkumulator oder der Batterie ist damit blockiert, wobei insbesondere bei dem thermischen Durchgehen des Akkumulators oder der Batterie im Inneren des Innenbehälters, die exotherm chemische Reaktion vorrangig auf das Innere des Innenbehälters beschränkt ist. Durch das abdichtende Verschließen des Innenbehälters kann zudem Sauerstoff nicht in das Innere des Innenbehälters gelangen, wodurch die darin ablaufende chemische Reaktion abgebremst wird.

Unter dem Bereitschaftszustand der Vorrichtung ist zu verstehen, dass in die Transport- und Lagervorrichtung jederzeit ein oder mehrere Akkumulatoren oder Batterien für deren Transport oder Lagerung eingegeben und nach erfolgten Transport oder Lagerung diese auch wieder entnommen werden können. Unter dem Aktivzustand der Vorrichtung ist zu verstehen, dass die Vorrichtung ausgelöst und der Innenbehälter der Transport- und Lagervorrichtung durch das in Kontakt bringen von Unter- und Oberteil abdichtend verschlossen wurde. Der Übergang vom Bereitschaftszustand in den Aktivzustand ist in einer Ausgestaltung der Erfindung vorzugsweise ein nur einmal umsetzbarer Vorgang, der nicht reversibel ist.

Die Anwendungsgebiete der feuerfesten Transport- und Lagervorrichtung richtet sich auf alle Typen von Akkus und/oder Batterien, insbesondere Lithium-Ionen-Akkumulatoren und/oder Lithium-Ionen-Batterien, an denen ein thermisches Durchgehen auftreten kann. Beispiele hierfür sind Lithium-Akkumulatoren, wie sie in akkubetriebenen Werkzeugen und Geräten jeglicher Art Anwendung finden. Lithium-Ionen-Akkus werden beispielsweise in E-Bikes, E-Scootern, Bau- und Gartengeräten oder in der Unterhaltungselektronik, des Modellbaus, in Laptops oder in militärischen Geräten eingesetzt.

Gemäß einer bevorzugten Weiterbildung der erfindungsgemäßen Transport- und Lagervorrichtung ist zwischen dem Oberteil und dem Deckelteil und/oder dem Unterteil und dem Bodenteil jeweils eine das Ober- und Unterteil zueinander im Abstand haltende Verbindung ausgebildet, welche dazu eingerichtet ist, im Falle des Erreichens einer Temperatur innerhalb der Vorrichtung von etwa 100°C, vorzugsweise oberhalb von einer 100°C, zu versagen, sodass die Vorrichtung in den Aktivzustand übergeht. Durch das Halten des Ober- und Unterteils in einem definierten Abstand zueinander können insbesondere zu Beginn des thermischen Durchgehens entstehende Gase sowie ein oft dabei einhergehender Druckanstieg sich über den Innenbehälter hinaus ausbreiten. Erst wenn innerhalb der Vorrichtung eine vorgegebene Temperatur von etwa 100 °C erreicht ist, wobei sich dann bereits ein Großteil der potentiell entstehenden Gase gebildet haben, löst sich das Oberteil von dem Deckelteil des Außenbehälters bzw. das Unterteil vom Bodenteil des Außenbehälters. Nach dem Aufheben der Verbindung zwischen mindestens einer Komponente des Innenbehälters und einer Komponente des Außenbehälters gehen das Oberteil und das Unterteil miteinander in Kontakt, sodass der Innenbehälter mit dem darin aufgenommenen Akku oder der Batterie abdichtend abgeschlossen ist. Etwaige bei der weiterlaufenden Reaktion entstehende Wärme wird dann gezielt innerhalb des Innenbehälters zurückgehalten. Damit wird einer übermäßigen Erwärmung insbesondere des Außenbehälters auf seiner Außenseite entgegengewirkt.

Vorzugsweise wird im Falle eines Übergangs der Vorrichtung in den Aktivzustand das Oberteil mittels seiner wirkenden Masse oder einer auf das Ober- oder Unterteil wirkenden Stellkraft mit dem Unter- oder Oberteil in Kontakt gebracht und gehalten. Ober- und Unterteil werden nach dem miteinander Inkontaktbringen durch eine vorbestimmte auf sie wirkende Kraft in abdichtender Schließstellung gehalten. Damit ist das unkontrollierte Entweichen von weiteren im Innenbehälter entstehenden Gasen in den Außenbehälter vermieden. Entsteht im Innenbehälter ein Druck der größer ist, als die Masse oder Stellkraft wird dieser in Richtung des Außenbehälters abgebaut. In einer bevorzugten Ausführung wird das Oberteil nach dem Aufheben der Verbindung mit dem Deckelteil durch sein Eigengewicht in Richtung des Unterteils bewegt. Anstelle der ausschließlich wirkenden Masse des Oberteils kann zum Sicherstellen der Schließfunktion am Innenbehälter das in Kontakt bringen und Halten des Innenbehälters in Schließstellung auch durch die zusätzlich auf das Oberteil oder das Unterteil wirkende Stellkraft erreicht werden.

Eine Weiterbildung der Erfindung sieht vor, dass das Oberteil eine Masse von mindestens 0,5 kg aufweist und/oder eine Stellkraft von 5 N oder mehr auf das Oberteil oder das Unterteil für das Inkontaktbringen der Teile miteinanderwirkt. Mithilfe der gewählten Masse des Oberteils von 0,5 kg bzw. der auf das Oberteil und das Unterteil einwirkenden Stellkraft von 5 N ist es möglich, einem Druckanstieg im Inneren des Innenbehälters entgegenzuwirken. Damit ist ein kontrollierter Rückhalt von im Innenbehälter entstehenden Gasen bewirkt, die mit dem im Akku oder der Batterie ablaufenden Reaktionsprozess erzeugt werden. Übersteigt der Druck im Innenbehälter die wirkende Masse und/oder Stellkraft, lösen sich bevorzugt das Unter- und Oberteil voneinander und es baut sich ein Teil des Druckes in das Innere des Außenbehälters ab. Zum Erzeugen der auf das Ober- oder Unterteil wirkenden Stellkraft sind an entsprechenden Positionen im Inneren der Vorrichtung ein oder mehrere Stelleinrichtungen vorgesehen, die ein unkontrolliertes Abheben des Oberteils vom Unterteil bzw. des Unterteils vom Oberteil verhindern.

In einer Ausführungsform der Erfindung ist zum Erzeugen der auf das Ober- oder Unterteil wirkenden Stellkraft im Kontaktbereich am Oberteil und Unterteil ein oder mehrere Magneten angeordnet und/oder zwischen dem Oberteil und dem Deckelteil oder zwischen dem Unterteil und dem Bodenteil mindestens ein Federelement angeordnet. Mithilfe von an dem Oberteil und dem Unterteil wirkenden Magneten ist eine sich wechselseitig auf Ober- und Unterteil wirkende Haltekraft erzeugt, mittels der ein Abheben von Ober- und Unterteil relativ zueinander und damit ein ungewolltes Öffnen des Innenbehälters vermieden wird. Anstelle von an Ober- und Unterteil wirkende Magneten können auch Federelemente verwendet werden, die dann vorzugsweise nur auf eine Komponente am Innenbehälter angreifen und insbesondere zwischen dem Oberteil des Innenbehälters und dem Deckelteil des Außenbehälters bzw. zwischen dem Unterteil des Innenbehälters und dem Bodenteil des Außenbehälters angeordnet ist/sind. Die setzen dann nach dem Aufheben der das Oberteil mit dem Deckelteil koppelnden Verbindung bzw. das Unterteil mit dem Bodenteil koppelnden Verbindung die Verstellbewegung um.

Gemäß einer alternativen oder optionalen Ausgestaltung ist vorgesehen, dass zumindest Teile des Unterteils- und/oder Oberteils ein magnetisches Material aufweisen oder aus einem magnetischen Material bestehen. Somit werden Teile des Innenbehälters selbst aus einem magnetischen Material gefertigt, was die Anordnung bzw. die Ausgestaltung des Innenbehälters und die Verwirklichung der zu erzeugenden Haltekraft zwischen Ober- und Unterteil weiter vereinfacht.

Vorzugsweise weist das Oberteil und/oder das Unterteil im Kontaktbereich des jeweiligen anderen Bauteils eine Dichtung aus vorzugsweise einem feuerbeständigem Material auf. Somit ist eine abdichtende Verbindung zwischen dem Oberteil und dem Unterteil bewirkt, wobei unter Verwendung eines feuerbeständigen Materials zur Ausbildung der Dichtung eine dauerhaft sichere Abdichtung gewährleistet werden kann. Die Dichtung ist vorzugsweise an parallel zueinander verlaufenden Flächen des Ober- oder Unterteils des Innenbehälters vorgesehen, welche den Kontaktbereich an Ober- und Unterteil ausbilden. In einer alternativen Ausgestaltung kann die Dichtung auch als ein separat zum Ober- oder Unterteil ausgeführtes Rahmensegment ausgeführt sein, welche insbesondere an einem der Kontaktbereiche von Ober- und Unterteil befestigt wird. Vorzugsweise kann dieses Rahmensegment als Dichtung zudem aus einem magnetischen Material zur Umsetzung der Haltefunktion bestehen.

Gemäß einer bevorzugten Ausgestaltung der Transport- und Lagervorrichtung sind das Oberteil und/oder das Unterteil jeweils im Abstand zu dem das Ober- und Unterteil außenseitig umgebenden Bodenteil und Deckelteil angeordnet. Damit ist ein direkter großflächiger Kontakt zwischen der Außenseite des Innenbehälters und der Innenseite des Außenbehälters vermieden bzw. auf nur wenige Punkte beschränkt. Insbesondere ist nur ein Kontakt in den Bereichen vorgesehen, welche die koppelnde Verbindung zwischen dem Innen- und Außenbehälter umsetzen, die nach Erreichen der kritischen Temperatur, bei der die Vorrichtung vom Bereitschaftszustand in den Aktivzustand übergeht, aufgehoben wird. In einer möglichen Ausführungsform können auch wenige dauerhaft aktive Abstandhalter zwischen dem Oberteil und dem Deckelteil und/oder dem Unterteil und dem Bodenteil vorhanden sein, wodurch der Wärmeeintrag in den Außenbehälter auf ein Minimum beschränkt ist. Insbesondere wird in den übrigen Bereichen, welche einen Anteil von mehr als 95% der Flächen an Innen- und Außenbehälter haben, ein Abstand von bevorzugt mehr als 10 mm zwischen der Außenfläche des Innenbehälters und der Innenfläche des Außenbehälters eingehalten. Vorzugsweise weist der Innenbehälter zur Innenseite des Außenbehälters einen Abstand von etwa 20 mm auf.

Vorzugsweise ist zwischen dem Bodenteil und dem Unterteil und/oder dem Deckelteil und dem Oberteil ein brandhemmendes Material oder Brandschutzmaterial angeordnet. Insbesondere wird mithilfe der im Abstand bzw. Zwischenraum zwischen den Teilen von Innen- und Außenbehälter angeordneten Materialien eine Isolierung des Innenbehälters vom Außenbehälter erzielt. Insbesondere soll damit ein verringerter Wärmeübergang vom Innenbehälter auf den Außenbehälter erreicht werden, sodass vermieden ist, dass sich die Außenseite des Außenbehälters über längere Zeit auf mehr als 100 °C erwärmt. Als Isolier- oder Brandschutzmaterial zum Füllen des Zwischenraumen zwischen dem Innenbehälter und dem Außenbehälter kann beispielsweise eine Glasfasermatte oder ein anderes geeignetes Füllmaterial auf Silikatbasis eingesetzt werden.

Eine Weiterbildung der Erfindung sieht vor, dass zwischen dem Bodenteil und dem Unterteil und/oder dem Deckelteil und dem Oberteil jeweils wenigstens ein Abschirmteil zum Abschirmen von im Innenbehälter entstandener Wärme von Boden- und Deckelteil des Außenbehälters vorgesehen ist. Mithilfe des Abschirmteils oder der Abschirmteile soll insbesondere an der Außenseite des Innenbehälters abgegebene Wärme daran gehindert werden, in Richtung des Außenbehälters übertragen zu werden. Vorzugsweise wird mittels der Abschirmteile eine weitere thermische Abtrennung in Richtung der durch den Außenbehälter der Vorrichtung erzeugten Wandung erzielt. Damit soll die an der Außenseite des Außenbehälters und damit der Vorrichtung auftretende Temperatur so gering wie möglich gehalten werden. Die Abschirmteile sind vorzugsweise separat zum Außenbehälter ausgebildet und als den Innenbehälter vom Boden- und Deckelteil abtrennende Schutzkammer zu sehen. Die Abschirmteile sind bevorzugt als zum Außenbehälter gehörend anzusehen, wobei im Sinne der Erfindung dann die sich bei etwa 100 °C aufhebende Verbindung zwischen dem Oberteil und dem Deckelteil also dem mit dem Deckelteil verbundenen oberen Abschirmteil bestehen kann. Ähnlich kann auch die sich aufhebende Verbindung zwischen dem Unterteil und dem zum Bodenteil des Außenbehälters zugehörigen unteren Abschirmteil ausgebildet sein. Die Abschirmteile können aus einem Metallwerkstoff oder einem Glasfasergewebe ausgebildet sein.

Vorzugsweise weist der Innenbehälter und/oder Außenbehälter ein oder mehrere Auslässe zum Ablassen eines im Inneren des Innenbehälters und/oder des Außenbehälters entstehenden Überdruckes auf. Mithilfe der am Innenbehälter und/oder Außenbehälter vorhandenen Auslässe sind bevorzugt Austrittsöffnungen geschaffen, mithilfe denen im Inneren der Vorrichtung, insbesondere im Innenbehälter entstehende Gase kontrolliert abgelassen werden können. Im Innenbehälter entstehende Gase können beispielsweise über die Auslässe kontrolliert in einen vom Außenbehälter definierten und den Innenbehälter umgebenden Zwischenraum abgegeben werden, um den Überdruck im Inneren des Innenbehälters unterhalb eines vorgegebenen Wertes zu halten. Vorzugsweise sind die Auslässe mit beispielsweise Ventilelementen gekoppelt, die oberhalb eines im Innenbehälter oder im Außenbehälter vorgegebenen Druckes öffnen. An den insbesondere im Innenbehälter ausgebildeten Auslässen kann ein Filtersystem angeschlossen sein. Das Filtersystem kann beispielsweise umwelt- oder gesundheitsgefährdende Bestandteile der über die Auslässe aus dem Behälter heraus geleiteten Gase herausfiltern. Das bevorzugt im Inneren der Transport- und Lagervorrichtung angeordnete Filtersystem kann mit einem Auslass im Außenbehälter gekoppelt sein. Mit Austreten der Gase aus dem Außenbehälter und in die Umgebung können diese nahezu schadstofffrei sein, auch wenn diese noch eine gegenüber der Umgebung erhöhte Temperatur haben können. Alternativ kann das Gas über den geschlossenen Verbindungsbereich zwischen Deckel- und Bodenteil austreten.

Vorzugsweise ist am Innenbehälter und/oder dem Außenbehälter wenigstens ein Durchlass für ein in das Innere des Innenbehälters zu führendes Ladekabel oder wenigstens eine im Inneren der Vorrichtung angeordnete Ladeeinrichtung vorgesehen. Über den Durchlass kann zumindest ein Ladekabel bzw. eine Leitung für ein innerhalb der Vorrichtung angeordnete Ladeeinrichtung von außen in zumindest den Außenbehälter der Vorrichtung geführt werden. Damit können innerhalb der Transport- und Lagervorrichtung aufgenommene Akkumulatoren bevorzugt aufgeladen werden. Somit ist an gelagerten Akkumulatoren eine Erhaltungsladung möglich, ohne diese aus der dafür vorgesehenen Transport- und Lagervorrichtung entnehmen zu müssen. Damit bietet die erfindungsgemäße Transport- und Lagervorrichtung auch für den Ladevorgang an sich eine entsprechende Schutzfunktion aus. Der Durchlass ist, wenn kein Ladekabel in das Innere der Vorrichtung geführt werden muss, bevorzugt abdichtend verschließbar.

In der simpelsten Form des Ladevorgangs eines Akkus wird ein Ladekabel über entsprechende Durchlässe im Innen- und Außenbehälter bis in das Innere des Innenbehälters geführt. In einer möglichen Ausführung der Erfindung ist eine Ladeeinrichtung innerhalb der erfindungsgemäßen Transportvorrichtung vorgesehen, die ein elektrischen Anschluss an insbesondere der Innenseite des Innenbehälters für das Laden des Akkumulators aufweist, so dass nur ein Durchlass im Außenbehälter benötigt wird. Anstelle einer steckergebundenen Ladeeinrichtung kann die Vorrichtung auch eine Ladeeinrichtung zum induktiven Laden vom im Inneren des Innenbehälters aufbewahrten Akkumulatoren aufweisen.

Gemäß einer bevorzugten Ausführungsform der Erfindung ist in einem Bereich zwischen dem Innenbehälter und dem Außenbehälter wenigstens ein Wärmeaufnahmebehälter mit einem Wärmeaufnahme- und/oder Kühlmittel angeordnet. Mithilfe des Wärmeaufnahmebehälters wird insbesondere innerhalb des Innenbehälters entstehende Wärme absorbiert. Dadurch wird der Innenbehälter bevorzugt heruntergekühlt und die im Inneren des Innenbehälters ablaufende exotherm chemische Reaktion verlangsamt. Dem thermischen Durchgehen eines Akkumulators oder einer Batterie im Innenbehältnis kann somit entgegengewirkt werden. Vorzugsweise ist das im Wärmeaufnahmebehälter enthaltene Wärmeaufnahme- und/oder Kühlmittel dazu eingerichtet, die entstandene Wärme zur Aggregatsumwandlung zu nutzen. Ein anfänglich festes oder flüssiges Wärmeaufnahme- und/oder Kühlmittel geht in seine Flüssig- oder Gasphase über. Die im Inneren des Außenbehälters, insbesondere in einem Zwischenraum zwischen dem Innenbehälter und dem Außenbehälter entstehende Gasphase wird vorzugsweise über im Außenbehälter vorhandene Auslässe oder über einen durch den Überdruck und das daraus resultierende Anheben des Deckelteils relativ zum Bodenteil entstehenden Spalten zwischen Deckelteil und Bodenteil in die Umgebung abgegeben.

In einer möglichen Ausgestaltung ist der Wärmeaufnahmebehälter aus einem bei einer Temperatur von etwa 100 °C, vorzugsweise oberhalb von 100 °C schmelzende Material zur Abgabe des darin enthaltenen Wärmeaufnahme- und/oder Kühlmittels ausgebildet. Das im Wärmeaufnahmebehälter enthaltene Wärmeaufnahme- und/oder Kühlmittel wird damit bevorzugt bei Erreichen einer Temperatur um die 100 °C innerhalb der Vorrichtung aus dem Wärmeaufnahmebehälter abgegeben und gleichmäßig innerhalb der Vorrichtung verteilt. Dadurch ist die Kühlwirkung auf den den Akkumulator und/oder die Batterie umgebenden Innenbehälter verbessert. Als Wärmeaufnahme- und/oder Kühlmittel kann beispielsweise Wasser oder ein Festkörper eingesetzt werden, das oder der dazu eingerichtet ist, bei Kontakt mit dem aufgeheizten Innenbehälter die Wärme aufzunehmen. Das Wärmeaufnahme- und/oder Kühlmittel kann seinen Aggregatzustand zumindest teilweise ändern. Dabei gehen vorzugsweise wenigstens Bestandteile des Wärmeaufnahme- und/oder Kühlmittels von der flüssigen bzw. festen Phase in die Dampfphase über. In einer bevorzugten Ausgestaltung wird beim Aufnehmen der Wärme durch das Wärmeaufnahme- und/oder Kühlmittel Wasserdampf erzeugt, der über mögliche in dem Außenbehälter vorhandene Auslässe oder über einen durch den Überdruck und das daraus resultierende Anheben des Deckelteils relativ zum Bodenteil entstehenden Spalten zwischen Deckelteil und Bodenteil kontrolliert in die Umgebung abgelassen werden kann.

Gemäß einer Weiterbildung der Transport- und Lagervorrichtung ist eine das Unterteil zum Oberteil in der abdichtenden Verschließstellung haltendende Arretierung vorgesehen, die vorzugsweise am Innenbehälter angeordnet ist. Mithilfe der das Oberteil und das Unterteil relativ zueinander in der abdichtenden Verschließstellung haltenden Arretierung ist ein erneutes Öffnen des Innenbehälters und damit das Austreten von Wärme oder etwaiger beim weiteren thermischen Durchgehen des Akkumulators und/oder der Batterie entstehender Gase vermieden. Vorzugsweise kann die Arretierung dazu eingerichtet sein, direkt nach dem erstmaligen Schließen des Innenbehälters dessen Unter- und Oberteil relativ zueinander zu arretieren. In einer möglichen Ausgestaltung ist die Arretierung dazu eingerichtet, das Ober- und Unterteil erst ab einer vorbestimmten Zeitdauer nach dem erstmaligen Schließen, insbesondere nach Erreichen einer Temperatur von mehr als 200°C, dauerhaft in Schließstellung zu halten. In einer möglichen Ausgestaltung kann die Arretierung dazu bestimmt sein, direkt mit dem Ober- und Unterteil zusammenzuwirken. In einer alternativen Ausgestaltung ist die Arretierung zwischen dem beweglichen Oberteil und dem zugeordneten Deckelteil oder zwischen dem beweglichen Unterteil und dem zugehörigen Bodenteil ausgebildet.

Vorzugsweise ist das Oberteil als Plattenkörper oder nach unten offene Schale und das Unterteil als nach oben offene Schale ausgebildet. Eine derartige Ausgestaltung stellt eine konstruktiv einfache Möglichkeit für die Ausgestaltung von den Innenbehälter ausbildenden und abdichtend miteinander in Kontakt bringbaren Ober- und Unterteil dar. Am Plattenkörper und der nach oben hin offenen Schale bzw. an den miteinander in Kontakt bringbaren Schalen sind insbesondere parallel zueinander ausgebildete Bauteilbereiche, beispielsweise in Form eines umlaufenden Materialsteges, vorgesehen, welche die Kontaktbereiche für das abdichtende verschließende des Innenbehälters von Ober- und Unterteil zueinander ausbilden. Insbesondere weisen der Plattenkörper und/oder die nach unten offene Schale des Oberteils bzw. das als nach oben offene Schale ausgebildete Unterteil senkrecht zur Schließebene gesehen, eine rechteckige Außenform auf.

Eine bevorzugte Ausführung der Erfindung sieht vor, dass etwaige durch das Kanten der als Schalen ausgebildeten Ober- und Unterteile entstehenden Fugen durch hitzebeständiges füllendes Klebe- oder Dichtmaterial von außen und/oder innen verschlossen sind. Alternativ können etwaige Kanten an der nach oben und unten offenen Schale ausgebildeten Fugen auch mittels einer entsprechenden Schweißnaht verschlossen sein.

Der Innen- und der Außenbehälter haben eine bevorzugt quaderförmige Ausgestaltung, wodurch die Transport- und Lagervorrichtung ein hohes Aufnahmevolumen in Verbindung mit einer vorteilhaften Stapelbarkeit mehrerer solcher Transport- und Lagervorrichtungen über- und nebeneinander aufweisen.

Vorzugsweise sind das Oberteil und/oder das Unterteil aus einem nicht brennbaren oder brandhemmenden Material gefertigt. Zur Ausgestaltung des Innenbehälters wird beispielsweise Aluminium oder Stahl verwendet, wodurch ein im Inneren des Innenbehälters aufgenommener Akkumulator und/oder Batterie im Falle seines thermischen Durchgehens sicher darin aufgenommen ist. Insbesondere wird zur Ausgestaltung von Ober- und/oder Unterteil des Innenbehälters ein magnetisches Material verwendet, wodurch die Schließfunktion des Innenbehälters und das Halten von Ober- und Unterteil nach dem Schließen des Innenbehälters zueinander vereinfacht ist. Alternativ kann zur Ausgestaltung von Ober- und Unterteil auch ein amagnetisches Material verwendet werden, insbesondere dann, wenn anstelle eines Magneten die Schließfunktion des Innenbehälters mithilfe einer eine Stellkraft zwischen Oberteil und Deckelteil bzw. Unterteil und Bodenteil erzeugenden Stelleinrichtung verwirklicht wird.

Vorzugsweise werden das aus einem metallischen Werkstoff ausgebildete Ober- und Unterteil über entsprechende Abstandhalter, wie beispielsweise Schrauben oder Nieten zudem jeweils zugeordneten Deckel- oder Bodenteil des Außenbehälters gehalten. Vorzugsweise sind die Abstandhalter mit einer bei einer Temperatur von etwa 100 °C, insbesondere oberhalb von 100 °C schmelzenden Sollbruchstelle ausgerüstet oder komplett aus einem bei besagten Temperaturen schmelzendem Material ausgeführt.

Vorzugsweise sind das Bodenteil und/oder das Deckelteil aus einem brennbaren oder bedingt brennbaren Material gefertigt. Vorzugsweise ist der den Innenbehälter umschließende Außenbehälter aus einem thermoplastischen Kunststoff ausgebildet damit weist der Außenbehälter eine reduzierte Wärmeleitfähigkeit auf, was es ermöglicht, den Außenbehälter zu berühren, auch wenn ggf. im Innenbehälter ein Akkumulator und/oder Batterie angeordnet ist, an dem/der ein Prozess des thermischen Durchgehens abläuft. Insbesondere in Verbindung mit einem zwischen den Innenbehälter und dem Außenbehälter angeordneten Brandschutzmaterial, was bevorzugt eine isolierende Wirkung hat, werden Temperaturen auf der Außenseite des Außenbehälters und damit der Vorrichtung erreicht, die unterhalb der Temperatur liegen, die ein Gefährdungspotential für etwaige den Behälter berührende Personen darstellt.

Ein weiterer Aspekt der Erfindung betrifft die Verwendung eines Innenbehälters zum Aufnehmen mindestens eines Akkumulators und/oder einer Batterie, mit einem Unterteil und einem zum Unterteil beweglichen Oberteil. Gemäß der Erfindung sind das Ober- und Unterteil zum abdichtenden Verschließen des Innenbehälters miteinander in Kontakt bringbar und zum Aufnehmen mindestens eines Akkumulators und/oder einer Batterie, insbesondere von Lithium-Ionen-Akkus und/oder -Batterien eingerichtet.

Vorzugsweise ist der verwendete Innenbehälter nach einer der vorstehend beschriebenen bevorzugten Ausführungsformen ausgebildet. Hinsichtlich der Verwendung eines solchen Innenbehälters wird auf die technischen Effekte und Vorteile der erfindungsgemäßen Transport- und Lagervorrichtung verwiesen. Die zur erfindungsgemäßen Transport- und Lagervorrichtung beschriebenen, bevorzugten Ausführungsformen bzw. Weiterbildungen sind zugleich auch bevorzugte Ausführungsformen der erfindungsgemäßen Verwendung.

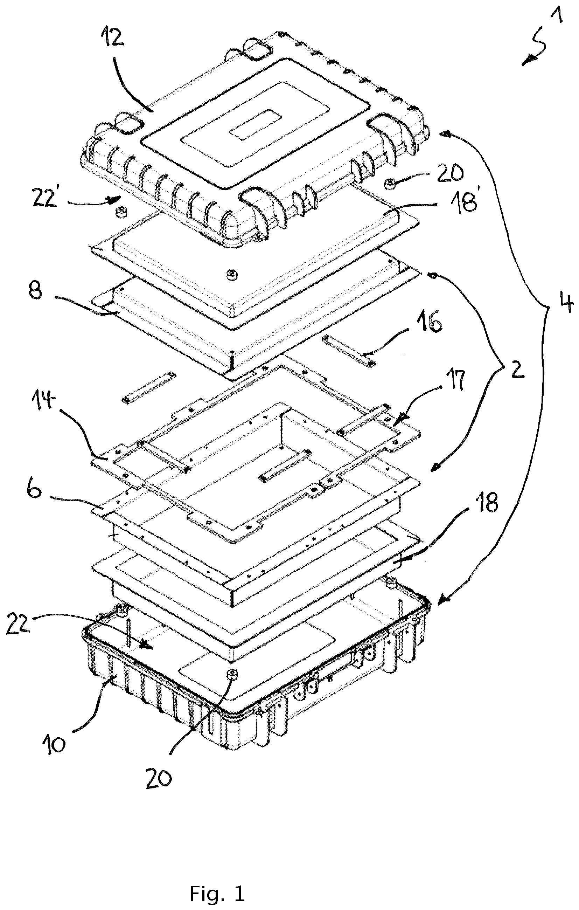

Die Erfindung wird im Folgenden beispielhaft anhand eines bevorzugten Ausführungsbeispiels einer Transport- und Lagervorrichtung unter Bezugnahme auf die hier beigefügte Figur näher beschrieben. Die einzige Figur zeigt eine perspektivische Ansicht einer erfindungsgemäßen Transport- und Lagervorrichtung.

Die Transport- und Lagervorrichtung 1 weist einen Innenbehälter 2 zum Aufnehmen mindestens eines Akkumulators oder einer Batterie, zur Vereinfachung nicht gezeigt, und einen den Innenbehälter 2 umgebenden Außenbehälter 4 auf. Der Innenbehälter 2 umfasst ein Unterteil 6 und ein Oberteil 8, welche bei geschlossenem Außenbehälter 4 und im Bereitschaftszustand der Vorrichtung 1 in Abstand zueinander angeordnet sind.

Der Außenbehälter 4 umfasst ein Bodenteil 10 und ein Deckelteil 12, welche miteinander in Kontakt gebracht werden, wobei der Außenbehälter 4 unabhängig vom Zustand der Vorrichtung 1 geschlossen ist. Im Falle des Übergangs der Vorrichtung von Ihrem Bereitschaftszustand in einen Aktivzustand werden das Unterteil 6 und das Oberteil 8 des Innenbehälters 2 zum abdichtenden Verschließen des Innenbehälters 2 miteinander in Anlage gebracht.

Um im Bereitschaftszustand der Vorrichtung 1 bei geschlossenen Außenbehälter 4 den Abstand von Unter- und Oberteil 6, 8 des Innenbehälters 2 zu wahren, weisen das Unterteil 6 mit dem Bodenteil 10 bzw. das Oberteil 8 mit dem Deckelteil 12 eine nicht näher gezeigte Verbindung auf. Die Verbindung ist dazu eingerichtet, das Unterteil 6 und das Oberteil 8 im Bereitschaftszustand im Abstand von etwa 10 bis 20 mm zueinander zu halten und im Falle des Übergangs vom Bereitschaftszustand in den Aktivzustand, insbesondere im Falle des Erreichens einer Temperatur innerhalb der Vorrichtung von etwa 100 °C, vorzugsweise oberhalb von 100 °C zu versagen. Das Unterteil 6 und das Oberteil 8 gelangen dann miteinander in Anlage und bewirken den abdichtenden Verschluss des Innenbehälters 2. Der Innenbehälter 2, bestehend aus dem Unterteil 6 und dem Oberteil 8 ist seinerseits zum Außenbehälter 4, umfassend das Bodenteil 10 und das Deckelteil 12, beabstandet angeordnet. Insbesondere ist zwischen die Wandungen vom Innen- und Außenbehälter 2, 4 ausbildenden Bereichen einen Abstand von etwa 30 mm vorgesehen.

In der gezeigten Ausführungsform ist mit dem Unterteil 6 ein Rahmensegment 14 verbunden, das die Funktion einer Dichtung im Kontaktbereich 17 zwischen den miteinander in Anlage bringbaren Unter- und Oberteil 6, 8 verwirklicht. Ferner sind am Unterteil 6 mehrere Magneten 16 angeordnet, die zum abdichtenden Verschließen des Innenbehälters 2 mit dem aus einem magnetischen Werkstoff bestehenden Oberteil 8 zusammenwirken. Die Magnete erzeugen eine Haltekraft zum Schließen des Innenbehälters 2..

In einer nicht näher dargestellten Ausführungsform kann auch eine die Stellbewegung des Oberteils 8 in Richtung des Unterteils 6 bzw. des Unterteils 6 in Richtung des Oberteils 8 umsetzende Stelleinrichtung vorgesehen sein, die beispielsweise als Federelement zwischen dem Oberteil 8 und dem Deckelteil 12 bzw. zwischen dem Unterteil 6 und dem Bodenteil 10 angeordnet ist.

Wie der vorliegenden Ausführungsform zu entnehmen, ist zwischen dem Oberteil 8 und dem Deckelteil 12 ein Abschirmteil 18 und ebenfalls zwischen dem Unterteil 6 und dem Bodenteil 10 ein Abschirmteil 18' angeordnet. Mithilfe der Abschirmteile 18, 18' wird die innerhalb des Innenbehälters 2 infolge des thermische Durchgehens eines Lithium-Ionen-Akkus und/oder -Batterie entstehende Wärme von dem im Abstand zum Innenbehälter 2 angeordneten Außenbehälter 4 abgeschirmt. Bevorzugt sind auch die Abschirmteile 18, 18' im Abstand zur Innenseite von Bodenteil 10 im Deckelteil 12 angeordnet. Um den Abstand zwischen den Abschirmteilen 18, 18' und dem Außenbehälter 4 zu wahren, weist die Vorrichtung 1 Abstandhalter 20, 20' auf.

Das Unterteil 6, das Oberteil 8 sowie die Abstandteile 18, 18' sind bevorzugt aus einem metallischen Werkstoff ausgebildet. Der Außenbehälter 4, insbesondere das Bodenteil- und Deckelteil 10, 12 sind jeweils aus einem brennbaren oder bedingt brennbaren Material gefertigt. Bodenteil 10 und Deckelteil 12 können über nicht näher gezeigte Verschlusselemente miteinander verbunden werden.

Das Unterteil 6, das Oberteil 8 sowie das Bodenteil 10 und das Deckelteil 12 sind jeweils als nach oben bzw. unten offene Schalen ausgebildet. Die Abschirmteile 18, 18, bevorzugt ebenfalls als Schalen ausgebildet, können aus einem den Innenbehälter 2 vom Außenbehälter 4 hinsichtlich der Wärmeübertragung trennenden bzw. abschirmenden Glasfasergewebe ausgeführt sein.

In einer möglichen Ausgestaltung der Erfindung ist die auf Kraftschluss basierende Verbindung zwischen dem Unterteil 6 und dem Oberteil 8 sowie dem Bodenteil 10 und dem Deckelteil 12 dazu bestimmt, oberhalb eines im Innenbehälter 2 und/oder im Außenbehälter 4 wirkenden Druckes kurzzeitig zu öffnen. Im Innenbehälter 2 und/oder dem Außenbehälter 4 anliegende übermäßig hohe Innendrücke können somit nach außen hin abgebaut werden. Alternativ weisen der Innenbehälter 2 und/oder der Außenbehälter 4 nicht näher gezeigte Auslässe zum Ablassen eines Innendruckes auf

In einer nicht näher gezeigten Ausführungsform der Transport- und Lagervorrichtung 1 weist diese wenigstens einen Durchbruch am Außenbehälter 4 für ein zumindest in den Außenbehälter einzuführendes Ladekabel auf. In einer möglichen Ausgestaltung ist auch am Innenbehälter 2 wenigstens ein gegebenenfalls verschließbarer Durchbruch für das Kabel in das Innere des Innenbehälters eingerichtet.

In einer ebenfalls nicht näher gezeigten Ausgestaltung ist innerhalb der Transport- und Lagervorrichtung 1, insbesondere im Bereich zwischen dem Innenbehälter 2 und dem Außenbehälter 4 wenigstens ein Wärmeaufnahmebehälter mit einem Wärmeaufnahme- und/oder Kühlmittel zum Aufnehmen der vom Akku oder der Batterie erzeugten Wärme angeordnet.

Im Zwischenraum 22 zwischen dem Bodenteil 10 und dem Unterteil 6 bzw. Abschirmteil 18 und im Zwischenraum 22' zwischen dem Deckelteil 12 und dem Oberteil 8 bzw. Abschirmteil 18' kann vorzugsweise ein brandhemmendes Material bzw. Brandschutzmaterial mit einer Isolierwirkung angeordnet sein.

### Bezugszeichenliste

- 1: Transport- und Lagervorrichtung
- 2: Innenbehälter
- 4: Außenbehälter
- 6: Unterteil
- 8: Oberteil
- 10: Bodenteil
- 12: Deckelteil
- 14: Rahmensegment
- 16: Magnet
- 17: Kontaktbereich
- 18, 18': Abschirmteil
- 20, 20': Abstandhalter
- 22, 22': Zwischenraum

## Patentansprüche

1. Feuerbeständige Transport- und Lagervorrichtung (1) für intakte und beschädigte Akkumulatoren und/oder Batterien, insbesondere Lithium-Ionen-Akkumulatoren und/oder Lithium-Ionen-Batterien, mit
- einem Innenbehälter (2) zum Aufnehmen mindestens eines Akkumulators und/oder einer Batterie, und
- einem den Innenbehälter (2) umgebenden Außenbehälter (4), mit einem Bodenteil (10) und einem beweglichen Deckelteil (12), welches mit dem Bodenteil (10) zum Schließen des Außenbehälters (4) in Kontakt bringbar ist,
**dadurch gekennzeichnet, dass** der Innenbehälter (2) ein Unterteil (6) und ein Oberteil (8) aufweist, welches in einem Bereitschaftszustand der Vorrichtung (1) zum Unterteil (6) beabstandet angeordnet ist,
wobei das Oberteil (8) und das Unterteil (6) dazu eingerichtet sind, im Falle eines Übergangs der Vorrichtung in ihren Aktivzustand zum abdichtenden Verschließen des Innenbehälters (2) miteinander in Kontakt gebracht zu werden.

2. Transport- und Lagervorrichtung (1) nach Anspruch 1,
**dadurch gekennzeichnet, dass** zwischen dem Oberteil (8) und dem Deckelteil (12) und/oder dem Unterteil (6) und dem Bodenteil (10) jeweils eine Ober- und Unterteil zueinander im Abstand haltende Verbindung ausgebildet ist, welche dazu eingerichtet ist, im Falle des Erreichens einer Temperatur innerhalb der Vorrichtung (1) von etwa 100°C, vorzugsweise oberhalb von 100°C, zu versagen, so dass die Vorrichtung (1) in den Aktivzustand übergeht.

3. Transport- und Lagervorrichtung (1) nach Anspruch 1 oder 2,
**dadurch gekennzeichnet, dass** im Falle eines Übergangs der Vorrichtung (1) in den Aktivzustand das Oberteil (8) mittels seiner wirkenden Masse und/oder einer auf das Ober- oder Unterteil (6, 8) wirkenden Stellkraft mit dem Unter- oder Oberteil (8, 6) in Kontakt gebracht und gehalten wird.

4. Transport- und Lagervorrichtung (1) nach Anspruch 3,
**dadurch gekennzeichnet, dass** das Oberteil (8) eine Masse von mindestens 0,5 kg aufweist und/oder eine Stellkraft von 5 N oder mehr auf das Oberteil (8) oder das Unterteil (6) wirkt.

5. Transport- und Lagervorrichtung (1) nach Anspruch 3 oder 4,
**dadurch gekennzeichnet, dass** zum Erzeugen der auf das Ober- oder Unterteil (6, 8) wirkenden Stellkraft im Kontaktbereich (17) am Oberteil und Unterteil (6, 8) ein oder mehrere Magneten (16) angeordnet und/oder zwischen dem Oberteil (8) und dem Deckelteil (12) oder zwischen dem Unterteil (6) und dem Bodenteil (10) mindestens ein Federelement angeordnet ist.

6. Transport- und Lagervorrichtung (1) nach einem der Ansprüche 3 bis 5,
**dadurch gekennzeichnet, dass** zumindest Teile des Unterteils (6) und/oder des Oberteils (8) ein magnetisches Material aufweisen oder aus einem magnetischen Material bestehen.

7. Transport- und Lagervorrichtung (1) nach einem der vorstehenden Ansprüche,
**dadurch gekennzeichnet, dass** das Oberteil (8) und/oder das Unterteil (6) im Kontaktbereich zum jeweils anderen Bauteil eine Dichtung (14) aus vorzugsweise einem feuerbeständigen Material aufweist.

8. Transport- und Lagervorrichtung (1) nach einem der vorstehenden Ansprüche,
**dadurch gekennzeichnet, dass** das Oberteil (8) und/oder das Unterteil (6) jeweils im Abstand zu dem das Ober- und Unterteil (6, 8) außenseitig umgebenden Bodenteil (19) und Deckelteil (12) angeordnet sind.

9. Transport- und Lagervorrichtung (1) nach einem der vorstehenden Ansprüche,
**dadurch gekennzeichnet, dass** zwischen dem Bodenteil (10) und dem Unterteil (6) und/oder dem Deckelteil (12) und dem Oberteil (8) ein brandhemmendes Material oder Brandschutzmaterial angeordnet ist.

10. Transport- und Lagervorrichtung (1) nach einem der vorstehenden Ansprüche,
**dadurch gekennzeichnet, dass** zwischen dem Bodenteil (10) und dem Unterteil (6) und/oder dem Deckelteil (12) und dem Oberteil (8) jeweils wenigstens ein Abschirmteil (18, 18`) zum Abschirmen von im Innenbehälter (2) entstandener Wärme von Boden- und Deckelteil (10, 12) des Außenbehälters (4) vorgesehen ist.

11. Transport- und Lagervorrichtung (1) nach einem der vorstehenden Ansprüche,
**dadurch gekennzeichnet, dass** der Innenbehälter (2) und/oder der Außenbehälter (4) ein oder mehrere Auslässe zum Ablassen eines im Inneren von Innenbehälter (2) und/oder Außenbehälter (4) entstehenden Überdruckes aufweist.

12. Transport- und Lagervorrichtung (1) nach einem der vorstehenden Ansprüche,
**dadurch gekennzeichnet, dass** der Innenbehälter (2) und/oder der Außenbehälter (4) wenigstens einen Durchlass für ein in das Innere des Innenbehälters (2) zu führendes Ladekabel oder wenigstens eine im Inneren der Vorrichtung (1) angeordnete Ladeeinrichtung aufweist.

13. Transport- und Lagervorrichtung (1) nach einem der vorstehenden Ansprüche,
**dadurch gekennzeichnet, dass** in einem Bereich zwischen dem Innenbehälter (2) und Außenbehälter (4) wenigstens ein Wärmeaufnahmebehälter mit einem Wärmeaufnahme- und/oder Kühlmittel angeordnet ist.

14. Transport- und Lagervorrichtung (1) nach einem der vorstehenden Ansprüche,
**dadurch gekennzeichnet, dass** der Wärmeaufnahmebehälter aus einem bei einer Temperatur von etwa 100°C, vorzugsweise oberhalb von 100°C, schmelzenden Material zur Abgabe des darin enthaltenen Wärmeaufnahme- und/oder Kühlmittels ausgebildet ist.

15. Transport- und Lagervorrichtung (1) nach einem der vorstehenden Ansprüche,
**dadurch gekennzeichnet, dass** eine das Unterteil (6) zum Oberteil (8) in der abdichtenden Verschließstellung haltende Arretierung vorgesehen ist, die vorzugsweise am Innenbehälter (2) angeordnet ist.

16. Transport- und Lagervorrichtung (1) nach einem der vorstehenden Ansprüche,
dass das Oberteil (8) als Plattenkörper oder nach unten offene Schale und das Unterteil (6) als nach oben offene Schale ausgebildet ist.

17. Transport- und Lagervorrichtung (1) nach einem der vorstehenden Ansprüche,
dass das Oberteil und/oder das Unterteil (6, 8) aus einem nicht brennbaren oder brandhemmenden Material gefertigt.

18. Transport- und Lagervorrichtung (1) nach einem der vorstehenden Ansprüche,
das Bodenteil und/oder das Deckelteil (10, 12) aus einem brennbaren oder bedingt brennbaren Material gefertigt sind.

19. Verwendung eines Innenbehälters (2) zum Aufnehmen mindestens eines Akkumulators und/oder einer Batterie, mit einem Unterteil (6) und einem zum Unterteil (6) beweglichen Oberteil (8), welches mit dem Unterteil zum abdichtenden Verschließen des Innenbehälters (2) in Kontakt bringbar ist, zum Aufnehmen mindestens eines Akkumulators und/oder einer Batterie, insbesondere von Lithium-Ionen-Akkumulatoren und/oder - Batterien.
